# FASCICULE DE BREVET EUROPEEN

(11) **EP 2 976 300 B1**
(45) Date de publication et mention de la délivrance du brevet: **10.05.2017**
(21) Numéro de dépôt: 14709326.4
(22) Date de dépôt: 12.03.2014
(51) Int. Cl.: C01G 33/00, B01J 37/00

(54) **COMPOSITION A BASE D'OXYDES DE ZIRCONIUM, DE CERIUM, DE NIOBIUM ET D'ETAIN, PROCEDES DE PREPARATION ET UTILISATION EN CATALYSE**
ZUSAMMENSETZUNG AUF BASIS VON ZIRCONIUM-, CER-, NIOB- UND ZINNOXIDEN, HERSTELLUNGSVERFAHREN UND VERWENDUNG IN KATALYSEOPERATIONEN
COMPOSITION BASED ON OXIDES OF ZIRCONIUM, CERIUM, NIOBIUM AND TIN, PREPARATION PROCESSES AND USE IN CATALYSIS

(30) Priorité: 19.03.2013 FR 1300629
(43) Date de publication de la demande: 27.01.2016
(73) Titulaire: Rhodia Operations, 75009 Paris (FR)
(72) Inventeur: BISSON, Laure, Jeanne, Simone, F-75010 Paris (FR); JORGE COELHO MARQUES, Rui, Miguel, F-17000 La Rochelle (FR); OCAMPO, Fabien, F-93000 Bobigny (FR); HARLE, Virginie, F-60300 Senlis (FR); HERNANDEZ, Julien, F-92160 Antony (FR)
(74) Mandataire: Senninger, Thierry
(86) Numéro de dépôt international: PCT/EP2014/054832
(87) Numéro de publication internationale: WO 2014/146950

(56) Documents cités:
- WO-A1-2012/004263
- FR-A1- 2 972 366

## Description

La présente invention concerne une composition à base d'oxydes de zirconium, de cérium, de niobium et d'étain, les procédés de préparation de celle-ci et son utilisation en catalyse, notamment pour le traitement des gaz d'échappement.

On sait que les moteurs des véhicules automobiles émettent des gaz contenant des oxydes d'azote (NOx) qui sont nocifs pour l'environnement. Il est donc nécessaire de traiter ces oxydes afin de les transformer en azote.

Une méthode connue pour ce traitement est le procédé SCR (Selective Catalytic Reduction ou Réduction Catalytique Sélective en français) dans lequel la réduction des NOx est effectuée par de l'ammoniac ou un précurseur de l'ammoniac comme l'urée.

Le procédé SCR nécessite pour sa mise en oeuvre un catalyseur qui, pour être efficace, doit présenter des propriétés de réductibilité et d'acidité.

Or, dans l'état actuel de la technique, cette efficacité doit être améliorée. En effet, les systèmes catalytiques utilisés actuellement pour la mise en oeuvre du procédé SCR ne sont souvent efficaces que pour des températures supérieures à 250°C. Il serait donc intéressant de disposer de catalyseurs qui puissent présenter une activité significative à des températures de l'ordre de 250°C. FR2972366 divulgue un procédé de traitement d'un gaz contenant des oxydes d'azote (NOx) dans lequel on utilise comme catalyseur de cette réaction de réduction un système catalytique contenant une composition à base de zirconium, de cérium et de niobium (oxyde de cérium entre 5% et 50%, cette dernière valeur étant exclue, oxyde de niobium entre 5% et 20%, le complément en oxyde de zirconium; proportions suivantes masse).

WO2012004263 divulgue une composition à base d'oxyde de cérium contenant l'oxyde de cérium au moins 50%, l'oxyde de niobium de 2 à 20% et l'oxyde de zirconium jusqu'à 48% (proportions en masse).

L'objet de l'invention est donc de fournir des catalyseurs plus efficaces pour la catalyse SCR et qui présentent des propriétés de réductibilité et/ou d'acidité améliorées.

Dans ce but, la composition de l'invention est une composition à base d'oxydes de zirconium, de cérium, de niobium et d'étain dans les proportions suivantes en masse d'oxyde :
- oxyde de cérium : entre 5% et 50%;
- oxyde de niobium : entre 5% et 20%;
- oxyde d'étain : entre 1% et 10%;
- le complément en oxyde de zirconium.

D'autres caractéristiques, détails et avantages de l'invention apparaîtront encore plus complètement à la lecture de la description qui va suivre, ainsi que des divers exemples concrets mais non limitatifs destinés à l'illustrer et du dessin annexé dans lequel :

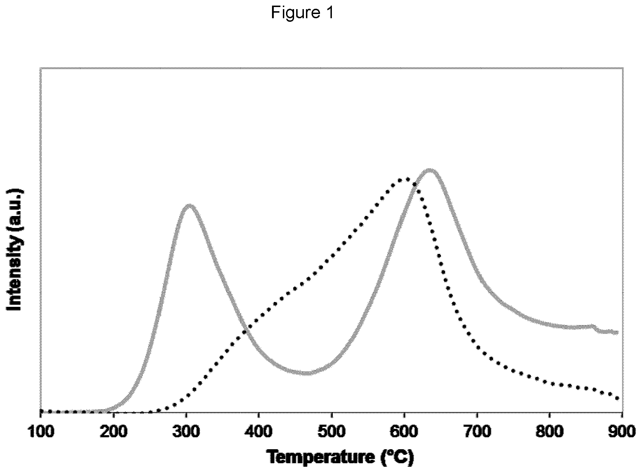

- la figure 1 repésente des courbes de mesure par réduction programmée en température (TPR) pour un produit selon l'invention et un produit comparatif.

Pour la présente description on entend par surface spécifique, la surface spécifique B.E.T. déterminée par adsorption d'azote conformément à la norme ASTM D 3663-78 établie à partir de la méthode BRUNAUER - EMMETT-TELLER décrite dans le périodique "The Journal of the American Society, 60, 309 (1938)".

Les valeurs de surface spécifiques qui sont indiquées pour une température et une durée données correspondent, sauf indication contraire, à des calcinations sous air à un palier à cette température et sur la durée indiquée.

Les calcinations mentionnées dans la description sont des calcinations sous air sauf indication contraire. La durée de calcination qui est indiquée pour une température correspond à la durée du palier à cette température.

On entend par terre rare les éléments du groupe constitué par l'yttrium et les éléments de la classification périodique de numéro atomique compris inclusivement entre 57 et 71.

Les teneurs ou proportions sont données en masse et en oxyde (notamment CeO₂, SnO₂, Ln₂O₃, Ln désignant une terre rare trivalente, Pr₆O₁₁ dans le cas particulier du praséodyme, Nb₂O₅ dans le cas du niobium) sauf indication contraire.

On précise aussi pour la suite de la description que, sauf indication contraire, dans les fourchettes de valeurs qui sont données, les valeurs aux bornes sont incluses.

La composition de l'invention se caractérise par la nature et les proportions de ses constituants.

Ainsi, elle est à base de zirconium, de cérium, de niobium et d'étain, ces éléments étant présents dans la composition généralement sous la forme d'oxydes. Il n'est toutefois pas exclu que ces éléments puissent être présents au moins en partie sous une autre forme par exemple sous forme d'hydroxydes ou d'oxyhydroxydes.

Ces éléments sont par ailleurs présents dans les proportions spécifiques qui ont été données plus haut.

La proportion en masse en oxyde de cérium de la composition peut être notamment comprise entre 5 et 40%, plus particulièrement entre 10 et 40% ou 15% et 40% et encore plus particulièrement comprise entre 10% et 30%.

La proportion en masse en oxyde de niobium de la composition peut être plus particulièrement comprise entre 5 et 15% et encore plus particulièrement comprise entre 5 et 10%. En deçà de 5% on note une moindre efficacité de la composition et au-delà de 20% on ne note plus d'amélioration de l'efficacité.

La proportion en masse en oxyde d'étain peut être plus particulièrement comprise entre 2% et 8%, plus particulièrement entre 4% et 6%.

Selon un mode de réalisation particulier de l'invention, la teneur en oxyde de zirconium peut être plus particulièrement comprise entre 50% et 85% et encore plus particulièrement entre 65% et 80%.

Selon une variante intéressante de l'invention la composition présente les proportions suivantes en combinaison :
- oxyde de cérium entre 10% et 25%;
- oxyde de niobium entre 5 et 15%;
- oxyde d'étain entre 4 et 6%;
- oxyde de zirconium entre 50% et 85%.

Selon un autre mode de réalisation de l'invention la composition de l'invention contient en outre au moins un élément M choisi dans le groupe comprenant le tungstène, le molybdène, le fer, le cuivre, le silicium, l'aluminium, le manganèse, le titane, le vanadium et les terres rares autres que le cérium.

Comme pour les autres éléments décrits plus haut de la composition, l'élément M est présent dans la composition généralement sous la forme d'oxyde mais d'autres formes (hydroxydes ou oxyhydroxydes) ne sont pas exclues.

Cet élément M peut notamment jouer le rôle de stabilisant de la surface spécifique de la composition ou encore améliorer la réductibilité de celle-ci. Pour la suite de la description on doit comprendre que, si par souci de simplification on ne mentionne qu'un élément M, il est bien entendu que l'invention s'applique au cas où les compositions comprennent plusieurs éléments M.

La proportion en élément M, exprimée en masse d'oxyde de cet élément par rapport à l'ensemble de la composition est d'au plus 20%.

La proportion maximale en oxyde de l'élément M dans le cas des terres rares et du tungstène peut être plus particulièrement d'au plus 15% et encore plus particulièrement d'au plus 10% en masse d'oxyde de l'élément M (terre rare et/ou tungstène). La teneur minimale est d'au moins 1%, plus particulièrement d'au moins 2%.

Dans le cas où M n'est ni une terre rare ni le tungstène, la teneur en l'oxyde de l'élément M peut être plus particulièrement d'au plus 10% et encore plus particulièrement d'au plus 5%. La teneur minimale peut être d'au moins 1%.

L'invention concerne aussi le cas où la composition consiste essentiellement en les éléments précités zirconium, cérium, niobium, étain et, le cas échéant élément M. Par « consiste essentiellement », on entend que la composition considérée ne contient que les éléments précités, sous les formes mentionnées plus haut, et qu'elle ne contient pas d'autre élément fonctionnel, c'est à dire susceptible d'avoir une influence positive sur l'action catalytique, l'acidité, la réductibilité et/ou la stabilité de la composition. Par contre, la composition peut contenir des éléments tels que des impuretés pouvant notamment provenir de son procédé de préparation, par exemple des matières premières ou des réactifs de départ utilisés.

Selon un mode de réalisation préféré de l'invention, les compositions se présentent sous la forme d'une solution solide des oxydes de niobium, de cérium, d'étain et, le cas échéant de l'élément M dans l'oxyde de zirconium. On observe alors dans ce cas la présence d'une phase unique en diffraction des rayons X correspondant à une phase de type oxyde de zirconium tétragonale ou cubique. Cette phase unique peut se présenter pour des compositions ayant subi des calcinations jusqu'à une température de 1000°C.

Les compositions de l'invention présentent une surface spécifique suffisamment stable, c'est-à-dire suffisamment élevée à haute température, pour qu'elles soient utilisables dans le domaine de la catalyse.

Ainsi, généralement, les compositions de l'invention peuvent présenter une surface spécifique après calcination 4 heures à 800°C qui est d'au moins 25 m²/g, plus particulièrement d'au moins 30 m²/g et encore plus particulièrement d'au moins 40 m²/g.

Les compositions de l'invention ont comme caractéristique intéressante d'avoir une mobilité améliorée de leurs atomes d'oxygène. Cette mobilité améliorée leur confère des propriétés intéressantes de réductibilité et une efficacité améliorée dans leur utilisation en catalyse.

Cette mobilité peut être mise en évidence par la mesure de la capacité de captage de l'hydrogène. Cette mesure est faite par réduction programmée en température de façon connue et dans des conditions qui seront décrites plus précisément plus loin dans la description. Cette mesure permet de suivre l'évolution du captage de l'hydrogène en fonction de la température. Dans le cas des compositions de l'invention, la mesure permet de mettre en évidence deux pics de réductibilité correspondant à un captage maximal de l'hydrogène.

Un de ces pics se situe à une température d'environ 600°C alors que le second se situe à une température d'environ 300°C.

Les propriétés d'acidité des compositions de l'invention se mesurent par leur capacité de stockage de l'ammoniac.

Les compositions de l'invention peuvent être préparées par différents procédés qui vont être décrits ci-dessous.

Un premier procédé est caractérisé en ce qu'il comprend les étapes suivantes :
- (a1) on prépare un mélange en milieu liquide contenant un composé du cérium, un composé de zirconium et, le cas échéant, de l'élément M;
- (b1) on met en présence ledit mélange et un composé basique, ce par quoi on obtient une suspension contenant un précipité;
- (c1) on chauffe la suspension obtenue à l'issue de l'étape (b1);
- (d1) on mélange le milieu obtenu à l'issue de l'étape (c1) avec une solution d'un sel de niobium et une solution d'un sel d'étain, ce mélange se faisant dans des conditions basiques;
- (e1) à partir du milieu obtenu à l'issue de l'étape (d1) on sépare le solide de la phase liquide;
- (f1) on calcine ledit solide.

La première étape du procédé consiste donc à préparer un mélange d'un composé du zirconium, d'un composé du cérium et, éventuellement, d'au moins un composé de l'élément M dans le cas de la préparation d'une composition contenant au moins un élément de ce type.

Le milieu liquide est l'eau de préférence.

Les composés sont de préférence des composés solubles. Ce peut être notamment des sels de zirconium, de cérium et de l'élément M. Ces composés peuvent être choisis en particulier parmi les nitrates, les sulfates, les acétates, les chlorures, les nitrates céri-ammoniacaux.

A titre d'exemples, on peut ainsi citer le sulfate de zirconium, le nitrate de zirconyle ou le chlorure de zirconyle. Le nitrate de zirconyle est utilisé le plus généralement. On peut citer aussi notamment les sels de cérium IV tels que le nitrate ou le nitrate céri-ammoniacal par exemple, qui conviennent ici particulièrement bien.

Il est aussi possible d'utiliser un sol comme composé de départ du zirconium ou du cérium. Par sol on désigne tout système constitué de fines particules solides de dimensions colloïdales, c'est à dire des dimensions comprises entre environ 1nm et environ 500nm, à base d'un composé de zirconium ou de cérium ce composé étant généralement un oxyde et/ou un oxyde hydraté de zirconium ou de cérium, en suspension dans une phase liquide aqueuse, lesdites particules pouvant en outre, éventuellement, contenir des quantités résiduelles d'ions liés ou adsorbés tels que par exemple des nitrates, des acétates, des chlorures ou des ammoniums. On notera que dans un tel sol, le zirconium ou le cérium peuvent se trouver soit totalement sous la forme de colloïdes, soit simultanément sous la forme d'ions et sous la forme de colloïdes.

On notera enfin que lorsque le mélange de départ contient un composé du cérium dans lequel celui-ci est sous forme de Ce III il est préférable de faire intervenir dans le cours du procédé un agent oxydant, par exemple de l'eau oxygénée. Cet agent oxydant peut être utilisé en étant ajouté au milieu réactionnel lors de l'étape (a1) ou lors de l'étape (b1), notamment à la fin de celle-ci.

Le mélange peut être indifféremment obtenu soit à partir de composés initialement à l'état solide que l'on introduira par la suite dans un pied de cuve d'eau par exemple, soit encore directement à partir de solutions de ces composés puis mélange, dans un ordre quelconque, desdites solutions.

Dans la deuxième étape du procédé, on met en présence le mélange obtenu à l'étape (a1) avec un composé basique. On peut utiliser comme base ou composé basique les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée. Le composé basique est généralement utilisé sous forme d'une solution aqueuse.

La manière d'effectuer la mise en présence du mélange et de la solution, c'est à dire l'ordre d'introduction de ceux-ci n'est pas critique. Toutefois, cette mise en présence peut se faire en introduisant le mélange dans la solution du composé basique. Cette variante est préférable pour obtenir les compositions sous forme de solutions solides.

L'étape suivante du procédé est l'étape de chauffage ou mûrissement (c1) de la suspension obtenue à l'issue de l'étape précédente.

Ce chauffage peut être réalisé directement sur la suspension obtenue après réaction avec le composé basique ou sur une suspension obtenue après séparation du précipité du milieu réactionnel, lavage éventuel et remise dans l'eau du précipité. La température à laquelle est chauffé le milieu est d'au moins 100°C et encore plus particulièrement d'au moins 130°C. L'opération de chauffage peut être conduite en introduisant le milieu liquide dans une enceinte close (réacteur fermé du type autoclave). Dans les conditions de températures données ci-dessus, et en milieu aqueux, on peut préciser, à titre illustratif, que la pression dans le réacteur fermé peut varier entre une valeur supérieure à 1 Bar (10⁵ Pa) et 165 Bar (1,65. 10⁷ Pa), de préférence entre 5 Bar (5. 10⁵ Pa) et 165 Bar (1,65. 10⁷ Pa). On peut aussi effectuer le chauffage dans un réacteur ouvert pour les températures voisines de 100°C.

Le chauffage peut être conduit soit sous air, soit sous atmosphère de gaz inerte, de préférence l'azote.

La durée du chauffage peut varier dans de larges limites, par exemple entre 1 et 48 heures, de préférence entre 2 et 24 heures.

Il est possible de faire plusieurs chauffages. Ainsi, on peut remettre en suspension dans l'eau, le précipité obtenu après l'étape de chauffage et éventuellement un lavage puis effectuer un autre chauffage du milieu ainsi obtenu. Cet autre chauffage se fait dans les mêmes conditions que celles qui ont été décrites pour le premier.

L'étape suivante du procédé, étape (d1), consiste à mélanger le milieu obtenu à l'issue de l'étape (c1) avec une solution d'un sel de niobium et une solution d'un sel d'étain, ce mélange se faisant dans des conditions basiques.

Comme sels d'étain et de niobium on peut utiliser les halogénures, les carboxylates notamment les acétates, oxalates, tartrates, éthylhexanoates ou acétylacétonates, les sulfates et, pour l'étain, les composés organostannés tels que les oxydes ou les chlorures de mono, di ou trialkylétain notamment les méthyles et éthyles. Pour les halogénures on peut mentionner plus particulièrement le chlorure. Le chlorure d'étain est utilisé le plus généralement sous forme d'un sel hydraté. Toutefois, les carboxylates et plus particulièrement les oxalates peuvent être préférés dans la mesure où ils diminuent le risque de pollution par les halogénures. On peut utiliser en particulier un sel ou une solution d'étain au degré d'oxydation IV mais l'utilisation d'étain au degré d'oxydation Il est également possible.

Le mélange avec les solutions de sels de niobium et d'étain peut se faire d'une manière quelconque et en plusieurs temps. On peut par exemple mélanger dans un premier temps le milieu issu de l'étape (c1) avec la solution d'étain puis dans un deuxième temps avec la solution de niobium. Le mélange peut aussi se faire dans l'ordre inverse ou encore simultanément les deux solutions étant mélangées en même temps avec le milieu précité.

Ce mélange doit se faire en milieu basique, de préférence à un pH d'au moins 9. Si le milieu n'est pas basique son pH peut être ajusté en introduisant dans celui-ci un composé basique du type précité.

L'étape suivante du procédé consiste à séparer par tout moyen connu le solide de la phase liquide à partir du milieu obtenu à l'issue de l'étape (d1).

Le solide peut éventuellement être lavé.

Enfin, dans une dernière étape le solide est calciné.

Cette calcination permet de développer la cristallinité du produit formé et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en oeuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 300°C et 900°C.

Par ailleurs, les compositions de l'invention peuvent être préparées par un second procédé qui est un procédé d'imprégnation.

Ainsi, on imprègne une composition d'oxydes de zirconium, de cérium et de niobium préalablement préparée par une solution d'un sel d'étain. On peut utiliser ici les sels d'étain qui ont été décrits plus haut.

On peut aussi imprégner par une solution de niobium une composition à base d'oxydes de zirconium, de cérium et d'étain préalablement préparée. On peut utiliser ici les sels de niobium qui ont été décrits plus haut.

Selon une première variante et dans le cas de la préparation d'une composition qui comprend en outre un oxyde de l'élément M on peut utiliser pour l'imprégnation une solution qui contient un sel de cet élément M en plus du sel de niobium ou d'étain. L'élément M peut aussi être présent dans la composition à imprégner à base d'oxydes de zirconium, de cérium, de niobium ou d'étain.

On utilise plus particulièrement l'imprégnation à sec. L'imprégnation à sec consiste à ajouter au produit à imprégner un volume d'une solution de l'élément imprégnant qui est égal au volume poreux du solide à imprégner.

Selon une seconde variante et dans le cas de l'imprégnation d'une composition d'oxydes de zirconium, de cérium et de niobium avec éventuellement un oxyde de l'élément M, cette dernière composition peut être préparée en mettant en oeuvre un procédé qui comprend les étapes suivantes :
- (a2) on prépare un mélange en milieu liquide contenant un composé du cérium, un composé de zirconium et, le cas échéant de l'élément M;
- (b2) on met en présence ledit mélange et un composé basique, ce par quoi on obtient une suspension contenant un précipité;
- (c2) on chauffe la suspension obtenue à l'issue de l'étape (b2);
- (d2) on mélange le milieu obtenu à l'issue de l'étape (c2) avec une solution d'un sel de niobium, ce mélange se faisant dans des conditions basiques;
- (e2) à partir du milieu obtenu à l'issue de l'étape (d2) on sépare le solide de la phase liquide;
- (f2) on calcine ledit solide ce par quoi on obtient la composition.

Selon une troisième variante et dans le cas de l'imprégnation d'une composition à base d'oxydes de zirconium, de cérium et d'étain avec éventuellement un oxyde de l'élément M, celle-ci peut être préparée en mettant en oeuvre un procédé qui comprend les étapes suivantes :
- (a3) on prépare un mélange en milieu liquide contenant un composé du cérium, un composé de zirconium et, le cas échéant de l'élément M;
- (b3) on met en présence ledit mélange et un composé basique, ce par quoi on obtient une suspension contenant un précipité;
- (c3) on chauffe la suspension obtenue à l'issue de l'étape (b3);
- (d3) on mélange le milieu obtenu à l'issue de l'étape (c3) avec une solution d'un sel d'étain, ce mélange se faisant dans des conditions basiques;
- (e3) à partir du milieu obtenu à l'issue de l'étape (d3) on sépare le solide de la phase liquide;
- (f3) on calcine ledit solide ce par quoi on obtient la composition.

Ce qui a été décrit plus haut pour chaque étape (a1), (b1), (c1), (d1), (e1) et (f1) s'applique de même aux étapes (a2) ou (a3), (b2) ou (b3), (c2) ou (c3), (d2) ou (d3), (e2) ou (e3) et (f2) ou (f3) respectivement.

L'invention concerne aussi un système catalytique qui comprend une composition à base d'oxydes de zirconium, de cérium, de niobium et d'étain telle que décrite plus haut. Dans ce système, la composition est généralement mélangée avec un matériau employé habituellement dans le domaine de la formulation de catalyseur, c'est à dire un matériau choisi parmi les matériaux inertes thermiquement. Ce matériau peut être ainsi choisi parmi l'alumine, l'oxyde de titane, l'oxyde de cérium, l'oxyde de zirconium, la silice, les spinelles, les silicates, les phosphates de silicoaluminium cristallins, les phosphates d'aluminium cristallins.

Généralement le système catalytique est constitué par le mélange précité déposé sur un substrat. Plus précisément, le mélange de la composition et du matériau inerte thermiquement constitue un revêtement (wash coat) à propriétés catalytiques et ce revêtement est déposé sur un substrat du type par exemple monolithe métallique, par exemple FerCralloy, ou en céramique, par exemple en cordiérite, en carbure de silicium, en titanate d'alumine ou en mullite.

Ce revêtement est obtenu par mélange de la composition avec le matériau inerte thermiquement de manière à former une suspension qui peut être ensuite déposée sur le substrat.

Selon un autre mode de réalisation le système catalytique peut être à base de la composition telle que décrite précédemment, celle-ci étant utilisée sous une forme extrudée. Elle peut se présenter ainsi sous la forme d'un monolithe ayant une structure de nid d'abeille ou sous la forme d'un monolithe de type filtre à particules (canaux en partie fermés). Dans ces deux cas, la composition de l'invention peut être mélangée à des additifs de type connu pour faciliter l'extrusion et garantir la tenue mécanique de l'extrudé. De tels additifs peuvent être choisis notamment parmi la silice, l'alumine, les argiles, les silicates, le sulfate de titane, les fibres céramiques, notamment dans des proportions utilisées généralement, c'est à dire jusqu'à environ 30% en masse par rapport à l'ensemble de la composition.

L'invention concerne aussi un système catalytique tel que décrit ci-dessus et qui contient en plus une zéolithe.

La zéolithe peut être naturelle ou synthétique et elle peut être de type aluminosilicate, aluminophosphate ou silicoaluminophosphate.

On utilise de préférence une zéolithe ayant subi un traitement en vue d'améliorer sa stabilité à haute température. Comme exemple de traitement de ce type on peut mentionner (i) la déalumination par traitement à la vapeur et extraction acide utilisant un acide ou un agent complexant (par exemple EDTA - acide éthylènediaminetétracétique); par traitement avec un acide et/ou un complexant; par traitement par un courant gazeux de SiCl₄; (ii) l'échange cationique par utilisation des cations polyvalents tels que La; et (iii) l'utilisation de composés contenant du phosphore.

Selon un autre mode de réalisation particulier de l'invention et dans le cas d'une zéolithe de type aluminosilicate, cette zéolithe peut présenter un rapport atomique Si/Al d'au moins 10, plus particulièrement d'au moins 20.

Selon un mode de réalisation plus particulier de l'invention, la zéolithe comprend au moins un autre élément choisi dans le groupe comprenant le fer, le cuivre ou le cérium.

Par zéolithe comprenant au moins un autre élément on entend une zéolithe dans la structure de laquelle ont été ajoutés par échange ionique, imprégnation ou substitution isomorphe un ou plusieurs métaux du type précité.

Dans ce mode de réalisation, la teneur en métal peut être comprise entre environ 1% et environ 5%, teneur exprimée en masse d'élément métallique par rapport à la zéolithe.

On peut mentionner plus particulièrement comme zéolithes du type aluminosilicate pouvant rentrer dans la constitution de la composition du système catalytique de l'invention celles choisies dans le groupe comprenant les zéolithes bêta, gamma, ZSM 5, ZSM 34, chabazite et ferrerite. Pour les zéolithes de type aluminophosphate, on peut mentionner celles du type SAPO-17, SAPO-18, SAPO-34, SAPO-35, SAPO-39, SAPO-43 and SAPO-56.

Dans le système catalytique de l'invention le pourcentage massique de zéolithe par rapport à la masse totale de la composition peut varier de 10 à 70%, plus préférentiellement de 20 à 60% et encore plus préférentiellement de 30 à 50%.

Pour la mise en oeuvre de cette variante avec zéolithe du système catalytique on peut effectuer un simple mélange physique de la composition à base de cérium, de zirconium, d'étain et de niobium et de la zéolithe.

Cette variante de l'invention mettant en oeuvre la combinaison d'une zéolithe telle que décrit ci-dessus et de la composition de l'invention confère une activité améliorée du système catalytique de l'invention pour ce qui concerne la réduction des NOx.

L'invention concerne aussi un procédé de traitement d'un gaz contenant des oxydes d'azote (NOx) dans lequel on réalise une réaction de réduction des NOx par un agent réducteur azoté, et dans lequel on utilise comme catalyseur de cette réaction de réduction une composition ou un système catalytique tels que décrits ci-dessus.

Le procédé de traitement de gaz de l'invention est un procédé de type SCR dont la mise en oeuvre est bien connue pour l'homme du métier.

On peut rappeler que ce procédé utilise comme réducteur des NOx un agent réducteur azoté qui peut être l'ammoniac, l'hydrazine ou n'importe quel précurseur approprié de l'ammoniac, tel que le carbonate d'ammonium, l'urée, le carbamate d'ammonium, l'hydrogèno-carbonate d'ammonium, le formiate d'ammonium ou encore les composés organométalliques contenant de l'ammoniac. L'ammoniac ou l'urée peuvent être plus particulièrement choisis.

Plusieurs réactions chimiques peuvent être mises en oeuvre dans le procédé SCR pour la réduction des NOx en azote élémentaire. On donne ci-dessous et à titre d'exemple seulement certaines des réactions susceptibles de se dérouler, l'ammoniac étant le réducteur.

Une première réaction peut être représentée par l'équation (1) :

4NO + 4NH₃ + O₂ → 4N₂ + 6H₂O (1)

On peut mentionner en outre, la réaction de NO₂ présent dans les NOx avec le NH₃ selon l'équation (2) :

3NO + 4NH₃ → (7/2)N₂ +6H₂O (2)

De plus, la réaction entre NH₃ et NO et NO peut être représentée par l'équation (3) :

NO+NO +2NH₃ → 2N₂ +3H₂O (3).

Le procédé peut être mis en oeuvre pour le traitement d'un gaz provenant d'un moteur à combustion interne (mobile ou stationnaire) notamment d'un moteur d'un véhicule automobile, ou de gaz provenant d'une turbine à gaz, de centrales électriques fonctionnant au charbon ou au fuel ou de toute autre installation industrielle.

Selon un mode de réalisation particulier, le procédé est utilisé pour traiter le gaz d'échappement d'un moteur d'un véhicule automobile qui peut être plus particulièrement un moteur à mélange pauvre ou un moteur diesel.

Le procédé peut aussi être mis en oeuvre en utilisant, outre la composition de l'invention, un autre catalyseur qui est un catalyseur d'oxydation du monoxyde d'azote du gaz en dioxyde d'azote. Dans un tel cas, le procédé est utilisé dans un système dans lequel ce catalyseur d'oxydation est disposé en amont du point d'injection du réducteur azoté dans le gaz à traiter, qui peut être notamment un gaz d'échappement.

Ce catalyseur d'oxydation peut comprendre au moins un métal du groupe du platine, comme le platine, le palladium ou le rhodium, sur un support de type alumine, cérine, zircone, oxyde de titane par exemple, l'ensemble catalyseur/support étant compris dans un revêtement (washcoat) sur un substrat de type monolithe notamment.

Selon une variante de l'invention et dans le cas d'un circuit d'échappement équipé d'un filtre à particules destiné à arrêter les particules carbonées ou suies engendrées par la combustion des divers combustibles, il est possible de mettre en oeuvre le procédé de traitement de gaz de l'invention en disposant le système catalytique qui a été décrit plus haut sur ce filtre, par exemple sous forme d'un wash-coat déposé sur les parois du filtre. On observe que l'utilisation des compositions de l'invention selon cette variante permet en plus de diminuer la température à partir de laquelle démarre la combustion des particules.

Des exemples vont maintenant être donnés.

### Mesure du taux de conversion des NOx

Pour les exemples, le taux de conversion des NOx est mesuré de la manière suivante.

On fait passer sur la composition un mélange gazeux synthétique de composition ci-dessous :
- NH₃: 1000 vpm
- NO: 500 vpm
- O₂: 13 vol%
- N₂: complément

On suit la conversion des NOx en fonction de la température du mélange gazeux. La montée en température du mélange se fait à une vitesse de 4°C/min avec un palier de 20 min. tous les 20°C entre 150°C et 250°C.

### Mesure de la capacité de captaqe de l'hydrogène

Pour les exemples, la mesure de la capacité de captage de l'hydrogène est faite par réduction programmée en température (TPR) de la manière suivante. On utilise un appareil Micromeritics Autochem 2 et un échantillon qui a été préalablement calciné à 800°C 4 heures sous air.

On utilise l'hydrogène comme gaz réducteur à 10% en volume dans l'argon avec un débit de 30 ml/mn.

Le protocole expérimental consiste à peser 200 mg de l'échantillon dans un récipient préalablement taré.

L'échantillon est ensuite introduit dans une cellule en quartz contenant dans le fond de la laine de quartz. L'échantillon est enfin recouvert de laine de quartz et positionné dans le four de l'appareil de mesure.

Le programme de température est le suivant :
- montée en température de la température ambiante jusqu'à 900°C avec une rampe de montée à 20°C/mn sous H₂ à 10%vol dans Ar.

Lors de ce programme, la température de l'échantillon est mesurée à l'aide d'un thermocouple placé dans la cellule de quartz au-dessus de l'échantillon.

La consommation d'hydrogène lors de la phase de réduction est déduite grâce à la calibration de la variation de la conductivité thermique du flux gazeux mesurée en sortie de la cellule à l'aide d'un détecteur de conductivité thermique (TCD).

La consommation d'hydrogène est mesurée entre 30°C et 900°C.

### Matières premières

Pour tous les exemples :
- Oxalate de niobium et d'ammonium à concentration en Nb₂O₅ de 28,3% massique de la société CBMM
- Oxalate d'étain (II) à concentration en SnO₂ de 72,3% de la société Fluka
- Peroxyde d'hydrogène (eau oxygénée) à 30% (110 volumes) à 9,8 mol/L, d = 1,11 de la société VWR.
- Nitrate de zirconium en solution à 274 g/L
- Nitrate de cérium (IV) en solution à 254 g/L

Pour l'exemple comparatif 1 :
- Chlorure d'étain (II) hydraté de formule : SnCl₂.5H₂O pureté 98% à concentration en SnO₂ de 42,1% massique de la société Sigma-Aldrich
- Nitrate de zirconium en solution à 270 g/L
- Nitrate de cérium (III) en solution à 496 g/L

### EXEMPLE 1 COMPARATIF

Cet exemple concerne la préparation d'un oxyde mixte de cérium, de zirconium et d'étain dans les proportions massiques respectives de 42,6%, 53,1% et 4,3%.

Dans un bécher et sous agitation magnétique on introduit 94,5 g de solution de nitrate de cérium III, 167,4 g de solution de nitrate de zirconium et 6,53 g de poudre de chlorure d'étain hydraté. Une solution d'ammoniaque est préparée à l'aide de 156 mL d'une solution d'ammoniaque concentrée (28%) dans 147 g d'eau désionisée, à laquelle est ajouté 97 mL d'une solution de peroxyde d'hydrogène concentrée à 30%. Cette solution basique est introduite dans un réacteur de 1 litre équipé d'un agitateur et d'un condenseur. La solution de nitrates préparée précédemment est introduite progressivement dans le réacteur sous agitation.

La suspension obtenue est filtrée, puis le gâteau obtenu est lavé deux fois avec une solution ammoniaquée. Le gâteau lavé est redispersé dans l'eau et la suspension est transférée dans un autoclave pour subir un mûrissement sous agitation, 2 h à 150°C. Le mélange est ensuite refroidi à température ambiante. La suspension obtenue est filtrée, puis le gâteau obtenu est lavé deux fois avec une solution ammoniaquée.

Le produit solide obtenu est séché une nuit à 120°C puis calciné à 500°C pendant 4 heures.

### EXEMPLE 2 COMPARATIF

Cet exemple concerne la préparation d'un oxyde mixte de cérium, de zirconium et de niobium dans les proportions massiques respectives de 18%, 72% et 10%.

Dans un bécher et sous agitation magnétique on introduit 495 g de nitrate de zirconium et 135 g de nitrate de cérium (IV) de manière à obtenir une concentration initiale de 120 g/L en oxyde. Une solution d'ammoniaque de 1 litre et de concentration 3 N est préparée à l'aide de 177 g d'une solution d'ammoniaque concentrée (29,8% en NH₃) dans 798 g d'eau désionisée, puis introduite dans un réacteur de 2 litres équipé d'un agitateur et d'un condenseur. La solution de nitrates est introduite progressivement dans le réacteur sous agitation.

La suspension obtenue est transférée dans un autoclave pour subir un mûrissement sous agitation, 2 h à 150°C. Puis le mélange est refroidi à température ambiante.

En parallèle, une solution d'oxalate de niobium (V) et d'ammonium est préparée par dissolution de 32,5 g d'oxalate de niobium (V) et d'ammonium dans 318 g d'eau désionisée. La concentration de cette solution est de 3,8% en Nb₂O₅.

La solution d'oxalate de niobium (V) et d'ammonium est introduite ensuite progressivement dans le réacteur de 2L et sous agitation, l'agitation étant maintenue pendant 15 min. après la fin de l'addition de la solution d'oxalate.

La suspension est filtrée, le produit solide obtenu est lavé et calciné à 800°C pendant 4 heures.

### EXEMPLE 3

Cet exemple concerne la préparation d'une composition selon l'invention à base d'oxyde de cérium, de zirconium, de niobium et d'étain dans les proportions massiques respectives de 17,3%, 69,1%, 9,6% et 4,0%. Cette préparation est faite selon le premier procédé décrit plus haut.

Dans un bécher et sous agitation magnétique on introduit 495 g de nitrate de zirconium et 135 g de nitrate de cérium de manière à obtenir une concentration initiale de 120 g/L en oxyde. Une solution d'ammoniaque de 1 litre et de concentration 3 N est préparée à l'aide de 177 g d'une solution d'ammoniaque concentrée (29,8% en NH₃) dans 798 g d'eau désionisée, puis introduite dans un réacteur de 2 litres équipé d'un agitateur et d'un condenseur. La solution de nitrates est introduite progressivement dans le réacteur sous agitation.

La suspension obtenue est transférée dans un autoclave pour subir un mûrissement sous agitation, 2 h à 150°C. Puis le mélange est refroidi à température ambiante.

En parallèle, une solution d'oxalate de niobium (V) et d'ammonium est préparée par dissolution de 47,1 g d'oxalate de niobium (V) et d'ammonium dans 195 g d'eau désionisée. La concentration de cette solution est de 5,5% en Nb₂O₅.

De même, une solution d'oxalate d'étain (IV) est préparée par mise en suspension sous agitation magnétique de 7,7 g d'oxalate d'étain (II) insoluble dans 79,6 g d'eau désionisée suivie d'une solubilisation par ajout de 4,2 g de solution de peroxyde d'hydrogène à 30% provoquant un phénomène d'oxydation des espèces Sn (II) en Sn (IV). La concentration de cette solution est de 6,1% en SnO₂.

La solution d'oxalate d'étain est ajoutée à celle d'oxalate de niobium et d'ammonium. Puis la solution résultante est introduite progressivement dans le réacteur de 2L et sous agitation, l'agitation étant maintenue pendant 15 min. après la fin de l'addition de la solution d'oxalate.

La suspension est filtrée, le produit solide obtenu est lavé et calciné à 800°C pendant 4 heures.

### EXEMPLE 4

Cet exemple concerne la préparation d'une composition selon l'invention à base d'oxyde de cérium, de zirconium, de niobium et d'étain dans les proportions massiques respectives de 16,9%, 67,7%, 9,4% et 6,0%. Cette préparation est faite par un procédé d'imprégnation décrit plus haut et selon la première variante.

Une solution d'oxalate d'étain (IV) est préparée par mise en suspension sous agitation de 1,73 g d'oxalate d'étain (II) insoluble dans 7,5 g d'eau désionisée suivie d'une solubilisation par ajout de 0,95 g de solution de peroxyde d'hydrogène à 30% provoquant un phénomène d'oxydation des espèces Sn (II) en Sn (IV). La concentration de cette solution est de 12,3% en SnO₂.

On imprègne ensuite avec cette solution une poudre de l'oxyde mixte obtenu selon l'exemple 2 comparatif ci-dessus jusqu'à saturation du volume poreux.

La poudre imprégnée est ensuite calcinée à 800°C pendant 4 heures.

### EXEMPLE 5

Cet exemple concerne la préparation d'une composition à base d'oxyde de cérium, de zirconium, de niobium et d'étain dans les proportions massiques respectives de 17,3%, 69,1%, 9,6% et 4,0%.

Une solution d'oxalate d'étain (IV) est préparée par mise en suspension sous agitation magnétique de 1,14 g d'oxalate d'étain (II) insoluble dans 8,5 g d'eau désionisée suivie d'une solubilisation par ajout de 0,63 g de solution de peroxyde d'hydrogène à 30% provoquant un phénomène d'oxydation des espèces Sn (II) en Sn (IV). La concentration de cette solution est de 8,0% en SnO₂.

On procède ensuite comme dans l'exemple 4.

### EXEMPLE 6

Cet exemple concerne la préparation d'une composition à base d'oxyde de cérium, de zirconium, d'étain et de niobium dans les proportions massiques respectives de 17,3%, 69,1%, 9,6% et 4,0%, cette préparation étant réalisée par imprégnation d'un oxyde mixte de zirconium, de cérium et d'étain par une solution de niobium.

### Préparation de l'oxyde mixte de zirconium, de cérium et d'étain

Dans un bécher et sous agitation magnétique on introduit 495 g de nitrate de zirconium et 135 g de nitrate de cérium (IV) de manière à obtenir une solution à la concentration initiale de 120 g/L en oxyde. Une solution d'ammoniaque de 1 litre et de concentration 3 N est préparée à l'aide de 177 g d'une solution d'ammoniaque concentrée (29,8% en NH₃) dans 798 g d'eau désionisée, puis introduite dans un réacteur de 2 litres équipé d'un agitateur et d'un condenseur. La solution de nitrates est introduite progressivement dans le réacteur sous agitation.

La suspension obtenue est transférée dans un autoclave pour subir un mûrissement sous agitation, 2 h à 150°C. Puis le mélange est refroidi à température ambiante.

Une solution d'oxalate d'étain (IV) est préparée par mise en suspension sous agitation magnétique de 7,7 g d'oxalate d'étain (II) insoluble dans 79,6 g d'eau désionisée suivie d'une solubilisation par ajout de 4,2 g de solution de peroxyde d'hydrogène à 30% provoquant un phénomène d'oxydation des espèces Sn (II) en Sn (IV). La concentration de cette solution est de 6,1% en SnO₂.

La solution d'oxalate d'étain est introduite progressivement dans le réacteur de 2L.

L'agitation est maintenue pendant 15 min. après ajout.

La suspension est filtrée, le produit solide obtenu est lavé et calciné à 800°C pendant 4 heures.

### Imprégnation de l'oxyde mixte de zirconium, de cérium et d'étain

Une solution d'oxalate de niobium (V) et d'ammonium est préparée par dissolution à chaud de 7,5 g d'oxalate de niobium (V) et d'ammonium dans 12,9 g d'eau désionisée. Cette solution est maintenue à 50°C. La concentration de cette solution est de 10,4% en Nb₂O₅. On imprègne ensuite avec une moitié de cette solution une poudre de l'oxyde mixte préparé précédemment jusqu'à saturation du volume poreux. La poudre imprégnée est ensuite calcinée à 400°C pendant 1 heure. Puis l'on procède à une deuxième imprégnation avec la moitié restante de solution comme décrit ci-dessus. La poudre imprégnée est ensuite calcinée à 800°C pendant 4 heures.

### EXEMPLE 7

Cet exemple concerne la préparation d'une composition à base d'oxyde de cérium, de zirconium, de niobium et d'étain dans les proportions massiques respectives de 38,7%, 48,2%, 9,2% et 3,9%, cette préparation étant réalisée par imprégnation d'un oxyde mixte de zirconium, de cérium et d'étain par une solution de niobium.

Une solution d'oxalate de niobium (V) et d'ammonium est préparée par dissolution à chaud de 4,6 g d'oxalate de niobium (V) et d'ammonium dans 4,3 g d'eau désionisée. Cette solution est maintenue à 50°C. La concentration de cette solution est de 14,7 % en Nb₂O₅.

On imprègne ensuite avec une moitié de cette solution 20 g de poudre de l'oxyde mixte préparé selon l'exemple 1 comparatif (CeO₂/ZrO₂/SnO₂ 42,6%/53, 1%/4,3%, surface spécifique après calcination à 800°C 4 heures de 68 m²/g) jusqu'à saturation du volume poreux.

La poudre imprégnée est ensuite calcinée à 400°C pendant 1 heure. Puis l'on procède à une deuxième imprégnation avec la moitié restante de solution comme décrit ci-dessus. La poudre imprégnée est ensuite calcinée à 800°C pendant 4 heures.

On donne dans les tableaux 1 et 2 ci-dessous, les surfaces spécifiques après calcination à différentes températures pour les compositions des exemples selon l'invention et les taux de conversion des NOx obtenus pour l'ensemble des exemples.

**Tableau 1**

| | Surface spécifique (m²/g) après calcination 4 heures à | | |
|---|---|---|---|
| Exemple | 800°C | 900°C | 1000°C |
| 1 | - | 31 | 9 |
| 2 | 48 | 25 | 9 |
| 3 | 49 | 23 | 8 |
| 4 | 43 | 24 | 8 |
| 5 | 45 | 24 | 8 |
| 6 | 39 | 22 | 10 |
| 7 | 31 | 12 | 3 |

Les produits des exemples 3 à 7 sont sous la forme d'une solution solide d'oxyde de zirconium tétragonal après calcination 4 heures à 800°C et 1000°C.

**Tableau 2**

| Exemple | NOx % conversion à | | | | |
|---|---|---|---|---|---|
| | 170°C | 190°C | 210°C | 230°C | 250°C |
| 1 comparatif | 4 | 4 | 5 | 10 | 21 |
| 2 comparatif | 5 | 12 | 26 | 45 | 66 |
| 3 | 6 | 16 | 35 | 62 | 84 |
| 4 | 8 | 17 | 35 | 61 | 85 |
| 5 | 9 | 11 | 36 | 56 | 71 |
| 6 | 7 | 17 | 37 | 64 | 82 |
| 7 | 6 | 22 | 49 | 77 | 92 |

On voit que les produits selon l'invention présentent un taux de conversion plus importants que les produits des exemples comparatifs et ceci à des températures qui sont d'au plus 250°C.

On donne dans le tableau 3 ci-dessous, les quantités d'hydrogène adsorbé (VH₂) pour les compositions des exemples comparatifs 1 et 2 et pour les exemples selon l'invention.

**Tableau 3**

| Exemple | VH₂ (mL) |
|---|---|
| 1 comparatif | 32 |
| 2 comparatif | 12,4 |
| 3 | 16,3 |
| 4 | 25,9 |
| 5 | 21,2 |
| 6 | 17,7 |
| 7 | 30,9 |

On donne dans le tableau 4 ci-dessous, les températures auxquelles on observe un pic dans les courbes de mesure de TPR.

**Tableau 4**

| Exemple | Température (°C) |
|---|---|
| 1 comparatif | 230/600 |
| 2 comparatif | 600 |
| 3 | 303/634 |
| 4 | 281/597 |
| 5 | 276/593 |
| 6 | 289/658 |
| 7 | 317/645 |

On observe que les produits selon l'invention présentent deux pics de réductibilité ce qui traduit une plus grande mobilité des atomes d'oxygène de surface pour ces produits.

La figure représente deux courbes de mesure de TPR. La courbe en tracé continu correspond au produit de l'exemple 3 et la courbe en pointillé correspond au produit de l'exemple comparatif 2.

## Revendications

1. Composition à base d'oxydes de zirconium, de cérium, de niobium et d'étain dans les proportions suivantes en masse d'oxyde :
- oxyde de cérium - entre 5% et 50%;
- oxyde de niobium - entre 5% et 20%;
- oxyde d'étain - entre 1% et 10%;
- le complément en oxyde de zirconium.

2. Composition selon la revendication 1, **caractérisée en ce qu'**elle présente une proportion en oxyde de cérium comprise entre 5% et 40%, plus particulièrement entre 10% et 40%.

3. Composition selon la revendication 2, **caractérisée en ce qu'**elle présente une proportion en oxyde de cérium comprise entre 10% et 30%.

4. Composition selon l'une des revendications précédentes, **caractérisée en ce qu'**elle présente une proportion en oxyde de niobium comprise entre 5 et 15%, plus particulièrement entre 5% et 10%.

5. Composition selon l'une des revendications précédentes, **caractérisée en ce qu'**elle présente une proportion en oxyde d'étain comprise entre 2% et 8%, plus particulièrement entre 4% et 6%.

6. Composition selon l'une des revendications précédentes, **caractérisée en ce qu'**elle présente une proportion en oxyde de zirconium comprise entre 50% et 85%.

7. Composition selon l'une des revendications précédentes, **caractérisée en ce qu'**elle contient en outre au moins un oxyde d'un élément M choisi dans le groupe comprenant le tungstène, le molybdène, le fer, le cuivre, le silicium, l'aluminium, le manganèse, le titane, le vanadium et les terres rares autres que le cérium dans une proportion en oxyde de l'élément M d'au plus 20%.

8. Composition selon l'une des revendications précédentes, **caractérisée en ce qu'**elle se présente sous forme d'une solution solide des oxydes de cérium, de niobium et d'étain dans l'oxyde de zirconium.

9. Composition selon l'une des revendications précédentes, **caractérisée en ce qu'**elle présente deux pics de réductibilité lors de la mesure de sa capacité de stockage de l'oxygène.

10. Procédé de préparation d'une composition selon l'une des revendications précédentes, **caractérisé en ce qu'**il comprend les étapes suivantes :
- (a1) on prépare un mélange en milieu liquide contenant un composé du cérium, un composé de zirconium et, le cas échéant de l'élément M;
- (b1) on met en présence ledit mélange et un composé basique, ce par quoi on obtient une suspension contenant un précipité;
- (c1) on chauffe la suspension obtenue à l'issue de l'étape (b1);
- (d1) on mélange le milieu obtenu à l'issue de l'étape (c1) avec une solution d'un sel de niobium et une solution d'un sel d'étain, ce mélange se faisant dans des conditions basiques;
- (e1) à partir du milieu obtenu à l'issue de l'étape (d1) on sépare le solide de la phase liquide;
- (f1) on calcine ledit solide.

11. Procédé de préparation d'une composition selon l'une des revendications 1 à 9 **caractérisé en ce qu'**on imprègne par une solution d'étain une composition à base d'oxydes de zirconium, de cérium et de niobium, l'élément M, dans le cas de la préparation d'une composition le contenant, pouvant être présent soit dans la solution servant à l'imprégnation soit dans la composition à imprégner.

12. Procédé selon la revendication 11, **caractérisé en ce qu'**on imprègne une composition qui a été préalablement préparée par un procédé comprenant les étapes suivantes :
- (a2) on prépare un mélange en milieu liquide contenant un composé du cérium, un composé de zirconium et, le cas échéant de l'élément M;
- (b2) on met en présence ledit mélange et un composé basique, ce par quoi on obtient une suspension contenant un précipité;
- (c2) on chauffe la suspension obtenue à l'issue de l'étape (b2);
- (d2) on mélange le milieu obtenu à l'issue de l'étape (c2) avec une solution d'un sel de niobium, ce mélange se faisant dans des conditions basiques;
- (e2) à partir du milieu obtenu à l'issue de l'étape (d2) on sépare le solide de la phase liquide;
- (f2) on calcine ledit solide ce par quoi on obtient la composition.

13. Procédé de préparation d'une composition selon l'une des revendications 1 à 9, **caractérisé en ce qu'**on imprègne par une solution de niobium une composition à base d'oxydes de zirconium, de cérium et d'étain, l'élément M, dans le cas de la préparation d'une composition le contenant, pouvant être présent soit dans la solution servant à l'imprégnation soit dans la composition à imprégner.

14. Procédé selon la revendication 13, **caractérisé en ce qu'**on imprègne une composition qui a été préalablement préparée par un procédé comprenant les étapes suivantes :
- (a3) on prépare un mélange en milieu liquide contenant un composé du cérium, un composé de zirconium et, le cas échéant de l'élément M;
- (b3) on met en présence ledit mélange et un composé basique, ce par quoi on obtient une suspension contenant un précipité;
- (c3) on chauffe la suspension obtenue à l'issue de l'étape (b3);
- (d3) on mélange le milieu obtenu à l'issue de l'étape (c3) avec une solution d'un sel d'étain, ce mélange se faisant dans des conditions basiques;
- (e3) à partir du milieu obtenu à l'issue de l'étape (d3) on sépare le solide de la phase liquide;
- (f3) on calcine ledit solide ce par quoi on obtient la composition.

15. Procédé selon l'une des revendications 10, 12 ou 14, **caractérisé en ce qu'**on effectue l'étape de chauffage (c1), (c2) ou (c3) à une température d'au moins 100°C, plus particulièrement d'au moins 130°C.

16. Système catalytique, **caractérisé en ce qu'**il comprend une composition selon l'une des revendications 1 à 9.

17. Système catalytique selon la revendication 16, **caractérisé en ce qu'**il comprend en outre une zéolithe.

18. Procédé de traitement d'un gaz contenant des oxydes d'azote (NOx) dans lequel on réalise une réaction de réduction des NOx par un agent réducteur azoté, **caractérisé en ce qu'**on utilise comme catalyseur de cette réaction de réduction une composition selon l'une des revendications 1 à 9 ou un système catalytique selon l'une des revendications 16 ou 17.

19. Procédé selon la revendication 18, **caractérisé en ce qu'**on utilise l'ammoniac ou l'urée comme agent réducteur azoté.

20. Procédé selon l'une des revendications 18 ou 19, **caractérisé en ce qu'**on traite un gaz d'échappement d'un moteur d'un véhicule automobile.

## Patentansprüche

1. Zusammensetzung auf Basis von Zirconium-, Cer-, Niob- und Zinnoxid in folgenden Massenanteilen Oxid:
- Ceroxid: zwischen 5% und 50%;
- Nioboxid: zwischen 5% und 20%;
- Zinnoxid: zwischen 1% und 10%;
- der Rest Zirconiumoxid.

2. Zusammensetzung nach Anspruch 1, **dadurch gekennzeichnet, dass** sie einen Anteil Ceroxid zwischen 5% und 40%, insbesondere zwischen 10% und 40% aufweist.

3. Zusammensetzung nach Anspruch 2, **dadurch gekennzeichnet, dass** sie einen Anteil Ceroxid zwischen 10% und 30% aufweist.

4. Zusammensetzung nach einem der vorhergehenden Ansprüche, **dadurch gekennzeichnet, dass** sie einen Anteil Nioboxid zwischen 5 und 15%, insbesondere zwischen 5% und 10% aufweist.

5. Zusammensetzung nach einem der vorhergehenden Ansprüche, **dadurch gekennzeichnet, dass** sie einen Anteil Zinnoxid zwischen 2% und 8%, insbesondere zwischen 4% und 6% aufweist.

6. Zusammensetzung nach einem der vorhergehenden Ansprüche, **dadurch gekennzeichnet, dass** sie einen Anteil Zirconiumoxid zwischen 50% und 85% aufweist.

7. Zusammensetzung nach einem der vorhergehenden Ansprüche, **dadurch gekennzeichnet, dass** sie ferner mindestens ein Oxid eines Elements M, das aus der Gruppe umfassend Wolfram, Molybdän, Eisen, Kupfer, Silizium, Aluminium, Mangan, Titan, Vanadium und andere seltene Erden als Cer ausgewählt ist, in einem Anteil des Oxids des Elements M von höchstens 20% enthält.

8. Zusammensetzung nach einem der vorhergehenden Ansprüche, **dadurch gekennzeichnet, dass** sie in Form einer festen Lösung aus Cer-, Niob- und Zinnoxid in Zirconiumoxid vorliegt.

9. Zusammensetzung nach einem der vorhergehenden Ansprüche, **dadurch gekennzeichnet, dass** sie bei der Messung ihrer Sauerstoffspeicherfähigkeit zwei Peaks der Reduktionsfähigkeit aufweist.

10. Verfahren zur Herstellung einer Zusammensetzung nach einem der vorhergehenden Ansprüche, **dadurch gekennzeichnet, dass** es folgende Schritte umfasst:
- (a1) Herstellen einer Mischung in einem flüssigen Medium, die eine Cerverbindung, eine Zirconiumverbindung und gegebenenfalls eine Verbindung des Elements M enthält;
- (b1) Zusammengeben der Mischung und einer basischen Verbindung, wodurch eine Suspension erhalten wird, die einen Niederschlag enthält;
- (c1) Erwärmen der am Ende von Schritt (b1) erhaltenen Suspension;
- (d1) Mischen des am Ende von Schritt (c1) erhaltenen Mediums mit einer Lösung eines Niobsalzes und einer Lösung eines Zinnsalzes, wobei das Mischen unter basischen Bedingungen erfolgt;
- (e1) Trennen des Feststoffs von der flüssigen Phase aus dem am Ende von Schritt (d1) erhaltenen Medium;
- (f1) Kalzinieren des Feststoffs.

11. Verfahren zur Herstellung einer Zusammensetzung nach einem der Ansprüche 1 bis 9, **dadurch gekennzeichnet, dass** eine Zusammensetzung auf Basis von Zirconium-, Cer- und Nioboxid mit einer Zinnlösung getränkt wird, wobei das Element M, wenn eine Zusammensetzung hergestellt wird, die es enthält, entweder in der zum Tränken dienenden Lösung oder in der zu tränkenden Zusammensetzung vorhanden sein kann.

12. Verfahren nach Anspruch 11, **dadurch gekennzeichnet, dass** eine Zusammensetzung getränkt wird, die zuvor mit einem Verfahren hergestellt wurde, das folgende Schritte umfasst:
- (a2) Herstellen einer Mischung in einem flüssigen Medium, die eine Cerverbindung, eine Zirconiumverbindung und gegebenenfalls eine Verbindung des Elements M enthält;
- (b2) Zusammengeben der Mischung und einer basischen Verbindung, wodurch eine Suspension erhalten wird, die einen Niederschlag enthält;
- (c2) Erwärmen der am Ende von Schritt (b2) erhaltenen Suspension;
- (d2) Mischen des am Ende von Schritt (c2) erhaltenen Mediums mit einer Lösung eines Niobsalzes, wobei das Mischen unter basischen Bedingungen erfolgt;
- (e2) Trennen des Feststoffs von der flüssigen Phase aus dem am Ende von Schritt (d2) erhaltenen Medium;
- (f2) Kalzinieren des Feststoffs, wodurch die Zusammensetzung erhalten wird.

13. Verfahren zur Herstellung einer Zusammensetzung nach einem der Ansprüche 1 bis 9, **dadurch gekennzeichnet, dass** eine Zusammensetzung auf Basis von Zirconium-, Cer- und Zinnoxid mit einer Nioblösung getränkt wird, wobei das Element M, wenn eine Zusammensetzung hergestellt wird, die es enthält, entweder in der zum Tränken dienenden Lösung oder in der zu tränkenden Zusammensetzung vorhanden sein kann.

14. Verfahren nach Anspruch 13, **dadurch gekennzeichnet, dass** eine Zusammensetzung getränkt wird, die zuvor mit einem Verfahren hergestellt wurde, das folgende Schritte umfasst:
- (a3) Herstellen einer Mischung in einem flüssigen Medium, die eine Cerverbindung, eine Zirconiumverbindung und gegebenenfalls eine Verbindung des Elements M enthält;
- (b3) Zusammengeben der Mischung und einer basischen Verbindung, wodurch eine Suspension erhalten wird, die einen Niederschlag enthält;
- (c3) Erwärmen der am Ende von Schritt (b3) erhaltenen Suspension;
- (d3) Mischen des am Ende von Schritt (c3) erhaltenen Mediums mit einer Lösung eines Zinnsalzes, wobei das Mischen unter basischen Bedingungen erfolgt;
- (e3) Trennen des Feststoffs von der flüssigen Phase aus dem am Ende von Schritt (d3) erhaltenen Medium;
- (f3) Kalzinieren des Feststoffs, wodurch die Zusammensetzung erhalten wird.

15. Verfahren nach einem der Ansprüche 10, 12 oder 14, **dadurch gekennzeichnet, dass** der Schritt des Erwärmens (c1), (c2) oder (c3) bei einer Temperatur von mindestens 100°C, insbesondere mindestens 130°C durchgeführt wird.

16. Katalytisches System, **dadurch gekennzeichnet, dass** es eine Zusammensetzung nach einem der Ansprüche 1 bis 9 umfasst.

17. Katalytisches System nach Anspruch 16, **dadurch gekennzeichnet, dass** es ferner einen Zeolith umfasst.

18. Verfahren zur Behandlung eines Gases, das Stickoxide (NOx) enthält, in dem eine Reaktion zur NOx-Reduktion durch ein stickstoffhaltiges Reduktionsmittel durchgeführt wird, **dadurch gekennzeichnet, dass** als Katalysator dieser Reduktionsreaktion eine Zusammensetzung nach einem der Ansprüche 1 bis 9 oder ein katalytisches System nach einem der Ansprüche 16 oder 17 verwendet wird.

19. Verfahren nach Anspruch 18, **dadurch gekennzeichnet, dass** als stickstoffhaltiges Reduktionsmittel Ammoniak oder Harnstoff verwendet wird.

20. Verfahren nach einem der Ansprüche 18 oder 19, **dadurch gekennzeichnet, dass** ein Abgas eines Kraftfahrzeugmotors behandelt wird.

## Claims

1. Composition based on oxides of zirconium, cerium, niobium and tin in the following proportions by weight of oxide:
- cerium oxide: between 5% and 50%;
- niobium oxide: between 5% and 20%;
- tin oxide: between 1% and 10%;
- the remainder being zirconium oxide.

2. Composition according to Claim 1, **characterized in that** it exhibits a cerium oxide proportion of between 5% and 40%, more particularly between 10% and 40%.

3. Composition according to Claim 2, **characterized in that** it exhibits a cerium oxide proportion of between 10% and 30%.

4. Composition according to one of the preceding claims, **characterized in that** it exhibits a niobium oxide proportion of between 5% and 15%, more particularly between 5% and 10%.

5. Composition according to one of the preceding claims, **characterized in that** it exhibits a tin oxide proportion of between 2% and 8%, more particularly between 4% and 6%.

6. Composition according to one of the preceding claims, **characterized in that** it exhibits a zirconium oxide proportion of between 50% and 85%.

7. Composition according to one of the preceding claims, **characterized in that** it also contains at least one oxide of an element M selected from the group consisting of tungsten, molybdenum, iron, copper, silicon, aluminum, manganese, titanium, vanadium, and rare earth elements other than cerium, in a proportion of oxide of the element M of at most 20%.

8. Composition according to one of the preceding claims, **characterized in that** it is in the form of a solid solution of the oxides of cerium, niobium and tin in zirconium oxide.

9. Composition according to one of the preceding claims, **characterized in that** it exhibits two reducibility peaks during the measurement of its oxygen storage capacity.

10. Process for preparing a composition according to one of the preceding claims, **characterized in that** it comprises the following steps:
- (a1) a mixture in a liquid medium containing a cerium compound, a zirconium compound and, where appropriate, a compound of the element M is prepared;
- (b1) said mixture is brought together with a basic compound, whereby a suspension containing a precipitate is obtained;
- (c1) the suspension obtained at the end of step (b1) is heated;
- (d1) the medium obtained at the end of step (c1) is mixed with a solution of a niobium salt and a solution of a tin salt, this mixing being carried out under basic conditions;
- (e1) using the medium obtained at the end of step (d1), the solid is separated from the liquid phase;
- (f1) said solid is calcined.

11. Process for preparing a composition according to one of Claims 1 to 9, **characterized in that** a composition based on oxides of zirconium, cerium and niobium, and the element M in the case of the preparation of a composition containing same, which may be present either in the solution used for the impregnation or in the composition to be impregnated, is impregnated with a tin solution.

12. Process according to Claim 11, **characterized in that** a composition is impregnated which has been preprepared by means of a process comprising the following steps:
- (a2) a mixture in a liquid medium containing a cerium compound, a zirconium compound and, where appropriate, a compound of the element M is prepared;
- (b2) said mixture is brought together with a basic compound, whereby a suspension containing a precipitate is obtained;
- (c2) the suspension obtained at the end of step (b2) is heated;
- (d2) the medium obtained at the end of step (c2) is mixed with a solution of a niobium salt, this mixing being carried out under basic conditions;
- (e2) using the medium obtained at the end of step (d2), the solid is separated from the liquid phase;
- (f2) said solid is calcined, whereby the composition is obtained.

13. Process for preparing a composition according to one of Claims 1 to 9, **characterized in that** a composition based on oxides of zirconium, cerium and tin, and the element M in the case of the preparation of a composition containing same, which may be present either in the solution used for the impregnation or in the composition to be impregnated, is impregnated with a niobium solution.

14. Process according to Claim 13, **characterized in that** a composition is impregnated which has been preprepared by means of a process comprising the following steps:
- (a3) a mixture in a liquid medium containing a cerium compound, a zirconium compound and, where appropriate, a compound of the element M is prepared;
- (b3) said mixture is brought together with a basic compound, whereby a suspension containing a precipitate is obtained;
- (c3) the suspension obtained at the end of step (b3) is heated;
- (d3) the medium obtained at the end of step (c3) is mixed with a solution of a tin salt, this mixing being carried out under basic conditions;
- (e3) using the medium obtained at the end of step (d3), the solid is separated from the liquid phase;
- (f3) said solid is calcined, whereby the composition is obtained.

15. Process according to one of Claims 10, 12 and 14, **characterized in that** the heating step (c1), (c2) or (c3) is carried out at a temperature of at least 100°C, more particularly of at least 130°C.

16. Catalytic system, **characterized in that** it comprises a composition according to one of Claims 1 to 9.

17. Catalytic system according to Claim 16, **characterized in that** it also comprises a zeolite.

18. Process for treating a gas containing nitrogen oxides (NOx), in which a reaction for reduction of the NOx with a nitrogenous reducing agent is carried out, **characterized in that** a composition according to one of Claims 1 to 9, or a catalytic system according to either of Claims 16 and 17, is used as catalyst of this reduction reaction.

19. Process according to Claim 18, **characterized in that** ammonia or urea is used as nitrogenous reducing agent.

20. Process according to either of Claims 18 and 19, **characterized in that** an exhaust gas from a motor vehicle engine is treated.
